# EUROPÄISCHE PATENTANMELDUNG

(11) **EP 3 654 300 A1**
(43) Veröffentlichungstag der Anmeldung: **20.05.2020**
(21) Anmeldenummer: 18206534.2
(22) Anmeldetag: 15.11.2018
(51) Int. Cl.: G07C 9/02, G07B 3/02, G07B 5/00, G07F 17/14, B65H 16/00

(54) **ZUGANGSSYSTEM MIT WERT-BON-AUSGABEVORRICHTUNG**

(71) Anmelder: Autobahn Tank & Rast GmbH, 53175 Bonn (DE)
(72) Erfinder: SCHULMEISTER, Andreas, 53894 Mechernich (DE)
(74) Vertreter: Patentanwälte Bauer Vorberg Kayser

(57) **Zusammenfassung**

Die vorliegende Erfindung bezieht sich auf ein Zugangssystem (20) für Personen. Dieses weist auf
- einen Zugangskontrollautomaten (22),
- ein Wert-Bon-Ausgabemodul (26) mit einem Drucker (28), dem über eine Papierrolle (30), die eine Drehachse (X-X) aufweist, zu bedruckende Bons zugeführt werden, wobei
- das Wert-Bon-Ausgabemodul (22) immer dann einen Wert-Bon (40) ausgibt, wenn der Zugangskontrollautomat (22) ein Druckinitiierungssignal an den Wert-Bon-Ausgabeautomat (26) überträgt,
- eine Wert-Bon-Ausgabeausgabevorrichtung (32) die Wert-Bons (40) etwa rechtwinklig zu einer Durchgangsrichtung (D) ausgibt,

- eine Zugangssperre (24), die den Durchgang immer dann freigibt, wenn der Zugangskontrollautomat (22) im Falle der Zugangsberechtigung ein Zugangsfreigabesignal an die Zugangssperre (24) überträgt,
**wobei**
- das Wert-Bon-Ausgabemodul (26) in Bezug auf die Durchgangsrichtung (D) vor oder hinter, also seitlich des Zugangskontrollautomaten (22), angeordnet ist,
- die Drehachse (X-X) der Papierrolle (30) etwa parallel zur Ausgaberichtung der Wert-Bon-Ausgabevorrichtung (32) angeordnet ist,
- eine Umlenkvorrichtung (36) für eine Umlenkung eines von der Papierrolle (30) abgerollten Bonstreifens (38) aus der Durchgangsrichtung (D) in Ausgaberichtung der Wert-Bon-Ausgabevorrichtung (32).

## Beschreibung

Die vorliegende Erfindung bezieht sich auf ein Zugangssystem für Personen. Ein solches Zugangssystem weist auf
- eine Zugangssperre,
- einen Zugangskontrollautomaten,
- ein Wert-Bon-Ausgabemodul mit einem Drucker, dem über eine Papierrolle, die eine Drehachse aufweist, zu bedruckende Bons zugeführt werden.

Ein gattungsgemäßes Zugangssystem hat den Zweck, dass Personen nur dann der Zugang gewährt wird, wenn diese zuvor dazu berechtigt sind bzw. eine Berechtigung dafür erworben haben. Der Kunde bezahlt zum Beispiel direkt am Zugangssystem kontaktlos - mit der Karte oder mit einem QR-Code, der Durchgang wird freigeschaltet und ein Wert-Bon gedruckt. Auf Wunsch kann auch eine Quittung gedruckt werden.

Die Zugangsberechtigung wird dabei mithilfe des Zugangskontrollautomaten überprüft bzw. erworben. Zu diesem Zweck weist dieses entsprechende Lesegerät für beispielsweise Chipkarten, RFID-Karten oder auch einen Scanner für QR- oder Strich-Codes auf, über die sich ein Benutzer identifizieren kann. Alternativ kann der Zugang käuflich erworben werden.

Nach dem Erwerb des Zugangs ist der Benutzer zugangsberechtigt, der-Zugangskontrollautomat überträgt ein Zugangsfreigabesignal an das Wert-Bon-Ausgabemodul und gibt die Zugangssperre frei.

In den meisten Fällen ist die Zugangsberechtigung an eine Zahlung eines vorgesehenen Betrages gebunden. In diesem Fall weist das Zugangssystem ein Bezahlmodul auf, das die Zahlung annimmt und verwaltet. Die Begriffe Zahlung bzw. Zahlen beziehen sich dabei nicht ausschließlich auf Geld, sondern vielmehr auf alle denkbaren Zahlungsmittel. Das Bezahlmodul kann beispielsweise neben Münzen und Geldscheinen auch Kredit- oder andere Zahlungskarten sowie Gutscheine aller Art akzeptieren. Auch die Verwendung eines Transponders ist denkbar. Ein solcher Transponder überträgt Daten über eine eingelassene Antenne an beispielsweise einen Rechner oder Server, über den Zugangsstatistiken auswertbar sind. Eine ausreichende Zahlung durch den Benutzer am Bezahlmodul gibt ebenfalls die Zugangssperre frei, durch die der Benutzer den ansonsten für ihn gesperrten Bereich passieren kann.

Als Zugangssperren sind insbesondere Drehkreuze oder Drehtüren geeignet, denkbar sind aber auch sämtliche anderen Arten einer Zugangssperre.

Wesentlich bei gattungsgemäßen Zugangssystemen ist, dass nicht nur der Durchgang freigegeben, sondern auch ein Wert-Bon ausgegeben wird. Der Wert-Bon kann selbst beispielsweise wieder als Zahlungsmittel eingesetzt werden. Insbesondere hat es sich als vorteilhaft erwiesen, wenn der Wert-Bon in unmittelbarer Nähe des Zugangssystems verwendet werden kann, beispielsweise zum Kauf von Speisen oder Getränken in einem Geschäft oder Kiosk. Der Vorteil besteht darin, dass die Benutzer des Zugangssystems zwar eine bestimmte Zahlung leisten müssen, diese jedoch auf andere Leistungen übertragbar ist. Beispielsweise ist ein solches System für einen Zugang von öffentlichen Toiletten einsetzbar, selbst wenn das Verlangen einer Zahlung aus gesetzlichen oder moralischen Gründen nicht möglich bzw. gewünscht ist. Der Benutzer zahlt in einem solchen Fall zwar einen bestimmten Betrag, diese berechtigt ihn aber nicht nur zur Benutzung der Toilette, sondern ermöglicht ihm bei Vorlage eines Wert-Bons auch den Kauf von Speisen, Getränken oder ähnlichem.

Ein wesentlicher Nachteil bei bekannten gattungsgemäßen Zugangssystemen ist ihr großer Platzbedarf. Dies ist insbesondere deshalb problematisch, weil Durchgangsbereiche ohnehin oftmals sehr schmal sind. Hinzu kommt, dass Benutzer meist durch den gleichen Zugangsbereich beispielsweise in Sanitäranlagen hineingelangen, durch den sie anschließend den Sanitärbereich wieder verlassen müssen. Die Benutzer kommen sich also im Durchgang entgegen. Da das Zugangssystem trotz der bereits erläuterten Anforderungen trotzdem im Durchgang installiert sein muss, sollte es möglichst wenig Raum einnehmen. Dies ist insbesondere dann besonders wichtig, wenn die Wert-Bons rechtwinklig zur Durchgangsrichtung ausgegeben werden.

Die Aufgabe der vorliegenden Erfindung besteht somit darin, ein Zugangssystem für Personen zu schaffen, das einen Zugangskontrollautomaten, eine Zugangssperre und ein Wert-Bon-Ausgabemodul aufweist, aber trotzdem möglichst schmal baut und eine lichte Breite eines Durchgangsbereichs, in dem das Zugangssystem installiert ist, möglichst wenig verringert. Das Zugangssystem soll somit dafür geeignet sein, auch in schmalen Durchgangsbereichen installiert zu werden.

Erfindungsgemäß wird die Aufgabe durch ein Zugangssystem mit den Merkmalen des Patentanspruchs 1 gelöst.

Demnach weist das Zugangssystem auf
- einen Zugangskontrollautomaten,
- ein Wert-Bon-Ausgabemodul mit einem Drucker, dem über eine Papierrolle, die eine Drehachse aufweist, zu bedruckende Bons zugeführt werden, wobei
   - das Wert-Bon-Ausgabemodul immer dann einen Wert-Bon ausgibt, wenn der Zugangskontrollautomat ein Druckinitiierungssignal an den Wert-Bon-Ausgabeautomat überträgt,
   - eine Wert-Bon-Ausgabeausgabevorrichtung die Wert-Bons etwa rechtwinklig zu einer Durchgangsrichtung ausgibt,
- eine Zugangssperre, die den Durchgang immer dann freigibt, wenn der Zugangskontrollautomat im Falle der Zugangsberechtigung ein Zugangsfreigabesignal an die Zugangssperre überträgt,
**wobei**
- das Wert-Bon-Ausgabemodul in Bezug auf die Durchgangsrichtung vor oder hinter, also seitlich des Zugangskontrollautomaten, angeordnet ist,
- die Drehachse der Papierrolle etwa parallel zur Ausgaberichtung der Wert-Bon-Ausgabe angeordnet ist,
- eine Umlenkvorrichtung für eine Umlenkung eines von der Papierrolle abgerollten Bonstreifens aus der Durchgangsrichtung in Ausgaberichtung der Wert-Bon-Ausgabe vorgesehen ist.

Das erfindungsgemäße Zugangssystem berücksichtigt, dass aufgrund der notwendigen Komponenten eine Reduzierung des Gesamtvolumens des Zugangssystems kaum möglich ist. Entgegen üblicher Bemühungen, einzelne Komponenten in ihren Abmaßen weiter zu reduzieren, wählte die Erfinderin den Weg der konstruktiven Umgestaltung der einzelnen Komponenten.

Um einen möglichst wartungsarmen Betrieb zu ermöglichen, muss die Papierrolle möglichst viele zu bedruckende Bons aufweisen. Sie muss deshalb so groß wie möglich sein, wodurch ist der maximale Durchmesser der Papierrolle üblicherweise entsprechend groß ist. Eine Reduzierung des Durchmessers schließt sich aber aus, da dann weniger Bons vorhanden wären und die Papierrolle zu häufig gewechselt werden müsste.

Innerhalb des Wert-Bon-Ausgabemoduls sind auf der Papierrolle lediglich eine große Anzahl an nicht bedruckten Bons gelagert, die nur dann bedruckt werden, wenn eine ausreichende Zahlung vorgenommen wurde. Somit bezeichnet der Begriff Bon wertlose Papierabschnitte, die durch Bedrucken mit einem speziellen Aufdruck, zum Beispiel einem oder mehrerer Bar- oder QR-codes oder Kennungen mit dem eigentlichen Wert versehen und als Wert-Bons ausgegeben werden. Es ist zum einen denkbar, dass die Bons keinerlei Aufdruck aufweisen, also sozusagen blank sind, oder sie bereits mit wesentlichen Informationen (beispielsweise eine Wertangabe des späteren Wert-Bons (z.B. 50 C) oder Informationen zum Betreiber) bedruckt sind, die dann durch einen weiteren Aufdruck von Bar- oder QR-codes oder Kennungen ergänzt werden.

Erfindungsgemäß werden die wertlosen Bons auch genutzt, um auf Ihnen Statistiken oder andere Informationen auszudrucken. Die Bons werden dann also sozusagen als Druckerpapier eingesetzt.

Die erfindungsgemäße Anordnung der Papierrolle derart, dass sie sich parallel zur Durchgangsrichtung abrollt bzw. derart, dass ihre Drehachse etwa parallel zur Ausgaberichtung der Wert-Bon-Ausgabe angeordnet ist, bewirkt eine deutliche Reduzierung des Platzbedarfs in Richtung des lichten Raumes des Durchgangsbereichs. Letztendlich ist der maximale Durchmesser der Papierrolle nahezu frei wählbar, sie ist letztendlich nur durch ihre Höhe begrenzt, da sie zwischen Fußboden und Umlenkvorrichtung angeordnet sein muss.

Die Umlenkvorrichtung ist ein wesentlicher Bestandteil der Erfindung, da diese bewirkt, dass der abgerollte Bonstreifen bereits in Ausgaberichtung der Wert-Bons in den Drucker eingeführt wird. Dementsprechend wird der Bonstreifen über die Umlenkvorrichtung um etwa 90° umgelenkt.

In einer besonders vorteilhaften Ausführungsvariante rollt der Bonstreifen oben von der Papierrolle und etwa in Durchgangsrichtung ab. Es erfolgt die Umlenkung in den Drucker, die dafür notwendigen Komponenten sind ebenfalls oberhalb der Papierrolle angeordnet.

Um ein Abreißen des Bonstreifens vor Erreichen des Druckers zu verhindern, werden die entstehenden auf den Bonstreifen wirkenden Zugkräfte erfindungsgemäß reduziert. Es hat sich gezeigt, dass eine zwei- oder mehrstufige Umlenkung des Bonstreifens besonders schonend ist. In einer besonders vorteilhaften Ausführungsvariante erfolgt eine erste Umlenkung um etwa 45°, an die sie eine zweite Umlenkung um weitere etwa 45° anschließt. Neben der Reduzierung der Zugkräfte an den dafür vorgesehenen Umlenkrollen wird dadurch weiterhin ein zu starkes Abknicken des Bonstreifens, was zu einem seitlichen Einreißen führen kann, vermieden.

Eine federunterstützte Spannvorrichtung, ein sogenannter Tänzer ist vorgesehen, um die sich zwangsweise ergebenden variablen Zugkräfte auszugleichen. Ein Tänzer ist eine Drehrolle oder Umlenkrolle, die nicht ortsfest, sondern in Abhängigkeit der Zugkräfte und der entgegengesetzten Federkraft bewegbar angeordnet ist. Der Tänzer kompensiert dabei nicht nur die variablen Zugkräfte während des Abroll- und Druckvorgangs, sondern gleicht auch einen abnehmenden Durchmesser der Papierrolle aufgrund der Ausgabe der Wert-Bons aus.

Das erfindungsgemäße Zugangssystem ermöglicht die Anbringung des Druckersystems bzw. des Wert-Bon-Ausgabemoduls beidseitig des Zugangskontrollautomaten.

In einer besonders vorteilhaften Ausführungsvariante ist weiterhin ein Bezahlmodul zur Annahme von Zahlungsmitteln vorgesehen. Das Bezahlmodul kann beispielsweise neben Münzen und Geldscheinen auch Kredit- oder andere Zahlungskarten sowie Gutscheine aller Art akzeptieren. Auch die Verwendung eines Transponders ist denkbar.

Das Bezahlmodul kann unmittelbar an der Zugangssperre angeordnet sein, aber auch an einem anderen Ort positioniert sein. Ist er an einem anderen Ort positioniert, gibt dieser nach Annahme ausreichender Zahlungsmittel eine Zugangsberechtigung, beispielsweise in Form eines ausgedruckten QR- oder Strichcodes aus. Der Ausdruck wird vom Benutzer vor ein Lesegerät des Zugangskontrollautomaten gehalten und von diesem gelesen und geprüft, so dass schließlich die Zugangssperre freigegeben werden kann. Durch dieses Verfahren bzw. Anordnung wird das relativ zeitaufwändige Zahlen von der Zugangskontrolle entkoppelt, woraus sich ein schnellerer und reibungsloserer Ablauf am Zugangssystem ergibt.

Der Druck und die Vorhaltung nur eines Wert-Bons sind für die vorteilhafte Funktion des Zugangssystems völlig ausreichend, da üblicherweise ohnehin nur eine Person nach der anderen das Zugangssystem passieren kann. Für den Fall, dass das Zugangssystem gleichzeitig von mehreren Personen passiert werden kann, ist es aber auch denkbar, entsprechend mehrere Wert-Bons, beispielsweise zwei Wert-Bons im Voraus zu drucken und vorzuhalten. Es können dementsprechend auch mehrere Drucker vorhanden sein.

Die innerhalb des Wert-Bon-Ausgabemoduls vorzugsweise in Form einer Rolle aufgerollten Bons können entweder nach dem Bedrucken von der Rolle abgeschnitten werden, sie können aber auch mit Hilfe von perforierten Trennlinien durch eine entsprechende Vorrichtung nach dem Bedrucken abgerissen werden. Für den Fall, dass der bedruckte Wert-Bon von der Rolle abgeschnitten wird, ist ein entsprechendes Schneidwerkzeug vorgesehen, das nach dem Fertigstellen des Druckes das Material durchschneidet. Für diesen Fall ist vorzugsweise weiterhin ein Spannmechanismus vorgesehen, der den bedruckten, fertigen Wert-Bon von der Wert-Bonrolle wegzieht, sodass das Schneidwerkzeug leichter durch das Material schneiden kann.

Erfindungsgemäß weist das Zugangssystem unter anderem zum Zwecke der Speicherung und Auswertung der Benutzung einen Datenspeicher und einen Prozessor auf. Hierzu können beispielsweise die Anzahl der Benutzer, die Uhrzeit der Benutzung und die Frequenz der Benutzung ermittelt werden.

In einer besonders vorteilhaften Ausführungsvariante ist das Zugangssystem vernetzt, beispielsweise ans Internet oder Funknetz angeschlossen. Dadurch ist es möglich, dass Zahlungen bereits im Vorfeld erfolgen können. Zum Beispiel kann ein Busfahrer bereits vor Erreichen einer Autobahnraststätte eine Vielzahl an Zahlungen vornehmen (z.B. für 50 Personen). Die Zahlungen werden auf seiner Transponderkarte registriert, so dass er mit dieser einzigen Karte allen Insassen des Busses den Zutritt ermöglichen kann.

Anhand der nachfolgenden Figuren wird die Erfindung näher erläutert. Es zeigen:
- Fig. 1:: ein erfindungsgemäßes Zugangssystem von vorne,
- Fig. 2:: das Zugangssystem aus Figur 1 von der Seite,
- Fig. 3:: das Zugangssystem aus Figur 1 von oben,
- Fig. 4: den Aufbau eines erfindungsgemäßen Wert-Bon-Ausgabemoduls mit zum Teil ausgeblendeten Bauteilen.

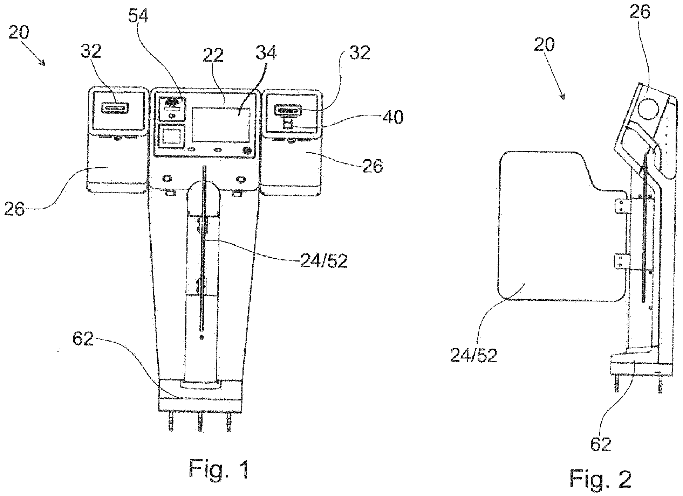

Die Figuren 1 bis 3 zeigen ein erfindungsgemäßes Zugangssystem 20. Das Zugangssystem 20 weist einen Zugangskontrollautomaten 22, eine Zugangssperre 24 und ein Wert-Bon-Ausgabemodul 26 auf. Die Zugangssperre 24 ist innerhalb eines zu kontrollierenden Durchganges angeordnet und sperrt diesen gegen unbefugtes Passieren. Im dargestellten Ausführungsbeispiel ist die Zugangssperre 24 als Türflügel 52 ausgeführt, es sind aber auch andere Arten von Zugangssperren 52 denkbar.

Eine Durchgangsrichtung D ist durch einen Pfeil 30 dargestellt. Ein nicht gezeigter Benutzer passiert also zunächst den Zugangskontrollautomat 22, muss sich dort legitimieren, kann dann die freigegebene Zugangssperre 24 passieren um schließlich einen Wert-Bon 40 aus dem Wert-Bon-Ausgabemodul 26, das im vorliegenden Ausführungsbeispiel in Zugangsrichtung hinter der Zugangssperre 24 angeordnet ist, entnehmen zu können. Der Zugangskontrollautomat 22 sendet im Falle der Zugangsberechtigung also ein Zugangsfreigabesignal an die Zugangssperre 24 und Druckinitiierungssignal an das Wert-Bon-Ausgabemodul 26. Die Anordnung, die Größe und die Gestalt der Elemente Zugangskontrollautomat 22, Zugangssperre 24 und Wert-Bon-Ausgabemodul 26 sind hier nur beispielhaft dargestellt, es sind selbstverständlich auch andere Ausführungen denkbar und sinnvoll.

Der Zugangskontrollautomat 22 kann optional ein Bezahlmodul 54 mit Zahlungsmittelannahmevorrichtungen zur Annahme von beispielsweise Münzen oder Karten (Kreditkarten, Smart-Cards etc.) aufweisen. Weiterhin ist im gezeigten Ausführungsbeispiel ein Display 34 vorgesehen, über das Informationen für den Benutzer und/oder Servicepersonal angezeigt werden können.

Im gezeigten Ausführungsbeispiel weist das Wert-Bon-Ausgabemodul 26 eine Wert-Bon-Ausgabevorrichtung 32 zur Ausgabe der Wert-Bons 40 auf. Die Ausgaberichtung der Wert-Bons 40 ist quer zur Durchgangsrichtung D angeordnet.

Der Zugangskontrollautomat 22, die Zugangssperre 24 und das Wert-Bon-Ausgabemodul 26 können an einem gemeinsamen Gestell angeordnet bzw. befestigt sein. Weiterhin stehen die drei Komponenten Zugangskontrollautomat 22, Zugangssperre 24 und Wert-Bon-Ausgabemodul 26 über eine geeignete kabellose oder kabelgebundene Datenverbindung miteinander in Kontakt. Ein nicht dargestellter Prozessor und ein Datenspeicher sind vorteilhafterweise ebenfalls vorgesehen, um das gesamte Zugangssystem 20 zu regeln. Auch kann das Zugangssystem 20 einen eigenen Prozessor und einen eigenen Datenspeicher aufweisen, um vom Bezahlmodul 22 übermittelte Daten oder Aufträge zu verarbeiten und zu speichern.

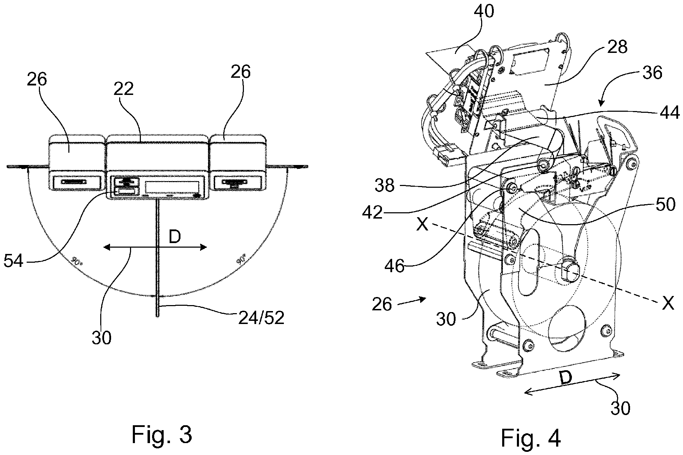

In den Figuren 1 bis 3 sind zwei Wert-Bon-Ausgabemodule 26 gezeigt, die jeweils seitlich des Zugangskontrollautomaten 22 angeordnet sind. Dies soll lediglich eine mögliche Option darstellen, wesentlich ist, dass beim erfindungsgemäßen Zugangssystem 20 das Wert-Bon-Ausgabemodul 26 beidseitig des Zugangskontrollautomaten 22 angeordnet werden kann. Wie sich insbesondere aus den Figuren 2 und 3 ergibt, kann der Türflügel 52 aber trotzdem aus seiner geschlossenen Stellung um 90° in seine Offenstellung verschwenkt werden.

Im gezeigten Ausführungsbeispiel weist der Türflügel 52 eine Ausnehmung auf seiner dem Zugangskontrollautomaten 22 zugewandten oberen Ecke auf, wodurch ermöglicht wird, dass der in den Durchgangsbereich hineinragende Wert-Bon-Ausgabemodul 26 das Verschwenken des Türflügels 52 nicht behindert.

Insbesondere Fig. 2 verdeutlicht, dass das gesamte Zugangssystem 20 ausgesprochen schmal baut und wenig Raum in Richtung des Durchgangsbereichs einnimmt. Das Zugangssystem 20 weist einen Fußbereich 62 auf, der zusammen mit dem Zugangskontrollautomaten 22 die maximale Erstreckung des Zugangssystems 20 in den Durchgangsbereich hinein darstellt. Davon ausgenommen ist selbstverständlich die Zugangssperre 24, die ja den Durchgang sperren soll. Figur 2 verdeutlicht, dass auch das Wert-Bon-Ausgabemodul 26 nicht über den Fußbereich 62 in Richtung des Durchgangsbereichs vorsteht.

Figur 4 verdeutlicht den Aufbau des erfindungsgemäßen Wert-Bon-Ausgabemoduls 26. Das Wert-Bon-Ausgabemodul 26 weist einen Drucker 28 auf, dem über eine Papierrolle 30, die eine Drehachse X-X aufweist, zu bedruckende Bons in Form eines Bonstreifens 38 zugeführt werden. Wesentlich ist, dass die Drehachse X-X der Papierrolle 30 quer bzw. rechtwinklig zur Durchgangsrichtung D angeordnet ist. Die Papierrolle 30 rollt also in Durchgangsrichtung D ab.

Um eine Ausgabe der Wert-Bons 40 quer zur Durchgangsrichtung D, also parallel zur Drehachse X-X der Papierrolle 30 zu erreichen, ist erfindungsgemäß eine Umlenkvorrichtung 36 zur Umlenkung des sich abrollenden Bonstreifens 38 vorgesehen.

Die Umlenkvorrichtung 36 weist im gezeigten Ausführungsbeispiel eine erste Umlenkrolle 42 auf, über die der Bonstreifen 38 um etwa 45° umgelenkt wird. Eine zweite Umlenkrolle 44 lenkt den Bonstreifen 38 anschließend um weitere 45° um, so dass der Bonstreifen 38 parallel zur Drehachse X-X in den Drucker 28 eingeführt wird.

In Laufrichtung des Bonstreifens 38 ist vor der ersten Umlenkrolle 42 eine Drehrolle 46 angeordnet, die parallel zur Drehachse X-X der Papierrolle 30 ausgerichtet ist. Die Drehrolle 46 ist im gezeigten Ausführungsbeispiel Teil einer Spannvorrichtung 50, die den Füllgrad der Papierrolle 30 kompensiert und den Bonstreifen 38 unter Spannung hält.

Die Erfindung ist nicht auf die gezeigten Ausführungsbeispiele beschränkt, sondern umfasst auch weitere Ausführungsvarianten. Auch sind die Figuren nicht in allen Details maßstabsgetreu, insbesondere können auch einzelne Komponenten andere Abmessungen aufweisen.

## Patentansprüche

1. Zugangssystem (20) für Personen, aufweisend
- einen Zugangskontrollautomaten (22),
- ein Wert-Bon-Ausgabemodul (26) mit einem Drucker (28), dem über eine Papierrolle (30), die eine Drehachse (X-X) aufweist, zu bedruckende Bons zugeführt werden, wobei
- das Wert-Bon-Ausgabemodul (22) immer dann einen Wert-Bon (40) ausgibt, wenn der Zugangskontrollautomat (22) ein Druckinitiierungssignal an den Wert-Bon-Ausgabeautomat (26) überträgt,
- eine Wert-Bon-Ausgabeausgabevorrichtung (32) die Wert-Bons (40) etwa rechtwinklig zu einer Durchgangsrichtung (D) ausgibt,
- eine Zugangssperre (24), die den Durchgang immer dann freigibt, wenn der Zugangskontrollautomat (22) im Falle der Zugangsberechtigung ein Zugangsfreigabesignal an die Zugangssperre (24) überträgt,
**wobei**
- das Wert-Bon-Ausgabemodul (26) in Bezug auf die Durchgangsrichtung (D) vor oder hinter, also seitlich des Zugangskontrollautomaten (22), angeordnet ist,
- die Drehachse (X-X) der Papierrolle (30) etwa parallel zur Ausgaberichtung der Wert-Bon-Ausgabevorrichtung (32) angeordnet ist,
- eine Umlenkvorrichtung (36) für eine Umlenkung eines von der Papierrolle (30) abgerollten Bonstreifens (38) aus der Durchgangsrichtung (D) in Ausgaberichtung der Wert-Bon-Ausgabevorrichtung (32).

2. Zugangssystem (20) nach Anspruch 1, **dadurch gekennzeichnet, dass** die eine Umlenkvorrichtung (36) eine erste Umlenkrolle (42), über die der Bonstreifens (38) um etwa 45° umgelenkt wird, und eine zweite Umlenkrolle (44) über die der Bonstreifens (38) um weitere 45° umgelenkt wird, aufweist.

3. Zugangssystem (20) nach Anspruch 2, **dadurch gekennzeichnet, dass** in Laufrichtung des Bonstreifens (38) vor der ersten Umlenkrolle (42) eine Drehrolle (46) angeordnet ist, die parallel zur Drehachse (X-X) der Papierrolle (30) ausgerichtet ist.

4. Zugangssystem (20) nach einem der Ansprüche 1 bis 3, **dadurch gekennzeichnet, dass** für den Bonstreifen (38) eine Spannvorrichtung (50) vorgesehen ist, die den Füllgrad der Papierrolle (30) kompensiert und den Bonstreifen (38) unter Spannung hält.

5. Zugangssystem (20) nach einem der Ansprüche 1 bis 4, **dadurch gekennzeichnet, dass** die Zugangssperre (24) einen Türflügel (52) aufweist, der aus der quer zur Durchgangsrichtung (D) verlaufenden Geschlossenstellung in eine parallel zur Durchgangsrichtung (D) verlaufende Offenstellung und zurück schwenkbar ist.

6. Zugangssystem (20) nach Anspruch 5, **dadurch gekennzeichnet, dass** der Türflügel (52) in Bezug auf die Durchgangsrichtung (D) in beide Richtungen aus der Geschlossenstellung in eine Offenstellung und zurück schwenkbar ist.

7. Zugangssystem (20) nach Anspruch 5 oder Anspruch 6, **dadurch gekennzeichnet, dass** der Türflügel (52) um mindestens 80°, vorzugsweise 90° schwenkbar ist.

8. Zugangssystem (20) nach einem der Ansprüche 1 bis 7, **dadurch gekennzeichnet, dass** der Zugangskontrollautomat (22) ein Bezahlmodul (54) aufweist und nur dann ein Zugangsfreigabesignal an die Zugangssperre (24) überträgt, wenn ausreichend Zahlungsmittel eingezahlt wurden.

9. Zugangssystem (20) nach Anspruch 8, **dadurch gekennzeichnet, dass** das Bezahlmodul (54) bargeldlose Zahlung ermöglicht.

10. Zugangssystem (20) nach einem der Ansprüche 1 bis 9, **dadurch gekennzeichnet, dass** der Zugangskontrollautomat (22) ein Lesegerät für Zugangsmittel zur Überprüfung einer Zugangserlaubniss aufweist.
